(19) Europäisches Patentamt
European Patent Office
Office européen des brevets

(11) **EP 2 410 436 A1**

(12) **EUROPEAN PATENT APPLICATION**

(43) Date of publication:
**25.01.2012 Bulletin 2012/04**

(51) Int Cl.:
**G06F 13/16** *(2006.01)*

(21) Application number: **11184468.4**

(22) Date of filing: **12.06.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **12.06.2007 US 934446 P**

(62) Document number(s) of the earlier application(s) in accordance with Art. 76 EPC:
**08770821.0 / 2 158 544**

(71) Applicant: **Rambus Inc.**
**Sunnyvale, CA 94089 (US)**

(72) Inventors:
• **Cline, Julia, V.M.**
**Sunnyvale, CA 94089 (US)**

• **Ho, Eugene, C.**
**Sunnyvale, CA 94089 (US)**
• **Stott, Bret, G.**
**Sunnyvale, CA 94089 (US)**
• **Ware, Frederick, A.**
**Sunnyvale, CA 94089 (US)**

(74) Representative: **Eisenführ, Speiser & Partner**
**Johannes-Brahms-Platz 1**
**20355 Hamburg (DE)**

Remarks:
This application was filed on 10-10-2011 as a divisional application to the application mentioned under INID code 62.

(54) **In-dram cycle-based levelization**

(57) Systems and methods are provided for in-DRAM cycle-based levelization. In a multi-rank, multi-lane memory system, an in-DRAM cycle-based levelization mechanism couples to a memory device in a rank and individually controls additive write latency and/or additive read latency for the memory device. The in-DRAM levelization mechanism ensures that a distribution of relative total write or read latencies across the lanes in the rank is substantially similar to that in another rank.

FIG. 11A

**Description**

**BACKGROUND**

The disclosure herein generally relates to memory systems. In particular, this disclosure relates to systems and methods for facilitating in-DRAM cycle-based levelization.

In a modem memory system, the signal flight time on a command/address bus may be different from the signal flight time on a data bus due to different topologies of the command/address bus and the data bus. Such flight-time discrepancy can prevent the data bus from reaching 100% utilization in a multi-rank, multi-lane memory system.

**BRIEF DESCRIPTION OF THE FIGURES**

FIG. 1 illustrates a dynamic random access memory (DRAM) system 100 with a fly-by command/address topology in accordance with an embodiment of the present invention.

FIG. 2 illustrates a DRAM system 200 with a fly-by command/address topology in accordance with an embodiment of the present invention.

FIG. 3 presents a set of exemplary native write-latency values for the DRAM devices in DRAM system 200 in accordance with an embodiment of the present invention.

FIG. 4 presents a write-operation timing diagram with in-controller write levelization for DRAM system 200 with the native write-latency values presented in FIG. 3, in accordance with an embodiment of the present invention.

FIG. 5 presents a set of write-operation timing diagrams with in-DRAM and in-controller write levelization for DRAM system 200 with the native write-latency values presented in FIG. 3, in accordance with an embodiment of the present invention.

FIG. 6 presents a set of write-operation timing diagrams with in-DRAM write levelization for DRAM system 200 with the native write-latency values presented in FIG. 3, in accordance with an embodiment of the present invention.

FIG. 7 presents a set of exemplary native read-latency values for the DRAM devices in DRAM system 200 in accordance with an embodiment of the present invention.

FIG. 8 presents a read-operation timing diagram with in-controller read levelization for DRAM system 200 with the native read-latency values presented in FIG. 7, in accordance with an embodiment of the present invention.

FIG. 9 presents a set of read-operation timing diagrams with in-DRAM and in-controller read levelization for DRAM system 200 with the native read-latency values presented in FIG. 7, in accordance with an embodiment of the present invention.

FIG. 10 presents a set of read-operation timing diagrams with in-DRAM read levelization for DRAM system 200 with the native read-latency values presented in FIG. 7, in accordance with an embodiment of the present invention.

FIG. 11A presents a block diagram of a DRAM module 1100 that facilitates both in-DRAM write and read levelization in accordance with an embodiment of the present invention.

FIG. 11B presents a block diagram of a levelization mechanism 1106 in accordance with an embodiment of the present invention.

FIG. 11C presents a block diagram of a memory controller 1140 in accordance with an embodiment of the present invention.

FIG. 12 presents a set of timing diagrams during an in-DRAM write-levelization configuration process in accordance with an embodiment of the present invention.

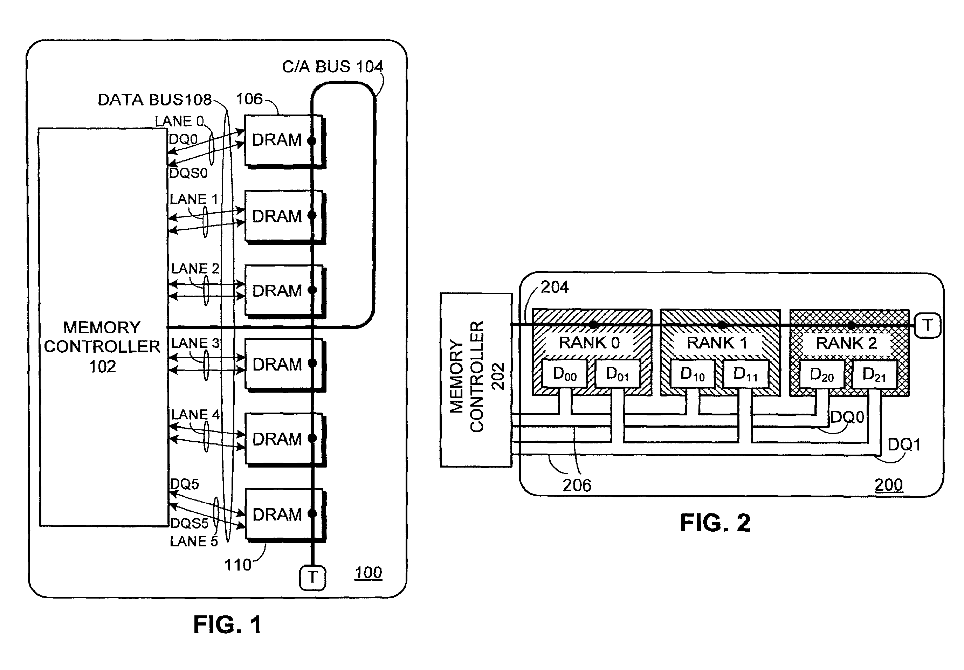

In the drawings, the same reference numbers identify identical or substantially similar elements or acts. The most significant digit or digits in a reference number refer to the figure number in which that element is first introduced. For example, element 100 is first introduced in and discussed in conjunction with FIG. 1.

**DETAILED DESCRIPTION**

The following description is presented to enable any person skilled in the art to make and use the invention, and is provided in the context of a particular application and its requirements. Various modifications to the disclosed embodiments will be readily apparent to those skilled in the art, and the general principles defined herein may be applied to other embodiments and applications without departing from the spirit and scope of the present invention. Thus, the present invention is not limited to the embodiments shown, but is to be accorded the widest scope consistent with the claims.

<u>Overview</u>

One embodiment of the present invention provides a memory system that facilitates in-DRAM cycle-based levelization for write and/or read operations in a multi-rank, multi-lane DRAM system. With in-DRAM cycle-based levelization, the system can individually program an additive write and/or read latency for a respective lane in a respective rank, thereby allowing the data bus to reach full utilization.

FIG. 1 illustrates a DRAM system 100 with a fly-by command/address topology in accordance with an embodiment of the present invention. System 100 includes a memory controller 102 and a plurality of memory devices (e.g., DRAM devices), including DRAM devices 106 and 110. The memory controller 102 is in communication with the DRAM devices via a command/address bus 104 and a data bus 108. In this disclosure, a memory device may contain one or more memory chips. A command/address bus may carry a clock signal, and can be referred to as a C/A bus, CMD/ADD bus, or RQ bus. A data bus, which carries data signals and/or data strobe signals, can be referred to as a DQ bus or DQ/DQS bus. Furthermore, a memory controller can be referred as a controller. The terminology "memory system," "DRAM system," or "system" can refer to one or more memory modules as well as a combination of a memory controller and one or more memory modules.

System 100 employs a fly-by topology for the command/address bus 104. With the fly-by topology, the command/address bus 104 passes by the DRAM devices in succession and may have one termination. This fly-by topology improves the signal quality at high data rates. The data bus 108, on the other hand, includes multiple lanes (e.g., LANE 0 to LANE 5). A lane can carry a group of signals with matched timings. A respective DRAM device couples to one or more lanes of the data bus. The total width of the data bus is $n \times k$ bits, wherein a lane is $k$-bit wide and the data bus includes $n$ lanes. For example, DRAM device 106 can exchange data with memory controller 102 through LANE 0, which includes a $k$-bit wide data bus DQ0 and a data strobe bus DQS0. Note that a data strobe bus can carry single-ended or differential data strobes. Another DRAM device 110 can exchange data with memory controller 102 through LANE 5, which includes a $k$-bit wide data bus DQ5 and a data strobe bus DQS5.

Due to the different topologies of the control/address bus and the data bus, the arrival time of a write command at a DRAM device can vary with respect to the arrival time of the data corresponding to the write command. When the difference between these two arrival times exceeds a clock cycle, the DRAM device can experience one or more clock cycles of native write latency. That is, the controller may need to alter the data transmission by one or more clock cycles compared to the write command. Similarly, the controller may experience a native read latency from a DRAM device. That is, the controller may need to wait for one or more clock cycles for the data to appear on the data bus after issuing a read command. The value of native write or read latency can grow larger in terms of the number of clock cycles when the clock speed increases.

Note that, in this disclosure, "write latency" refers to the timing difference between the *arrival* time of a write command at a DRAM device and the *arrival* time of the data burst at the DRAM device. "Native write latency," denoted as NWL, refers to the inherent timing difference between the arrival times of a write command and a data burst at a DRAM. Correspondingly, "additive write latency," denoted as AWL, refers to an additional, artificial write latency imposed to a DRAM device in addition to its native write latency. "Total write latency," denoted as TWL, refers to the total amount of timing difference between the arrival times of a write command and the data burst, and is the sum of the native write latency and additive write latency.

"Read latency," on the other hand, refers to the timing difference between the time when the controller places a read command on the command/address bus and when the controller receives the corresponding data burst. "Native read latency," denoted as NRL, refers to the inherent delay between the issuance of a read command by the controller and the time when the data burst is received by the controller. "Additive read latency," denoted as ARL, refers to an additional, artificial read latency imposed to a DRAM device in addition to its native read latency. "Total read latency," denoted as TRL, refers to the total amount of timing difference between the time when the controller issues a read command and the time when the controller receives the data burst, and is the sum of the native read latency and the additive read latency.

In a memory module, multiple memory devices can be arranged in a multi-rank configuration. A memory rank typically includes a set of memory devices, where a respective memory device couples to a respective lane of the data bus. All memory devices in a rank can be selected with a single chip-select signal. The distribution of native write or read latencies among different lanes in one rank can be different from that of another rank. This difference can prevent the controller from fully pipelining the data transfer and reaching 100% data-bus utilization. Embodiments of the present invention provide a mechanism that allows a DRAM device in a rank to adjust, or "levelize," its write/read latency. Such in-DRAM levelization can ensure that the write or read latency distribution in one rank is substantially similar to that of another rank, and hence allows up to 100% utilization of the data bus.

### In-DRAM Write Levelization

FIG. 2 illustrates a DRAM system 200 in which a number of memory devices are arranged in different ranks in accordance with an embodiment of the present invention. DRAM system 200 includes six DRAM devices, $D_{00}$, $D_{01}$, $D_{10}$, $D_{11}$, $D_{20}$, and $D_{21}$, which are arranged in three ranks with devices $D_{00}$ and $D_{01}$ in RANK 0, devices $D_{10}$ and $D_{11}$ in

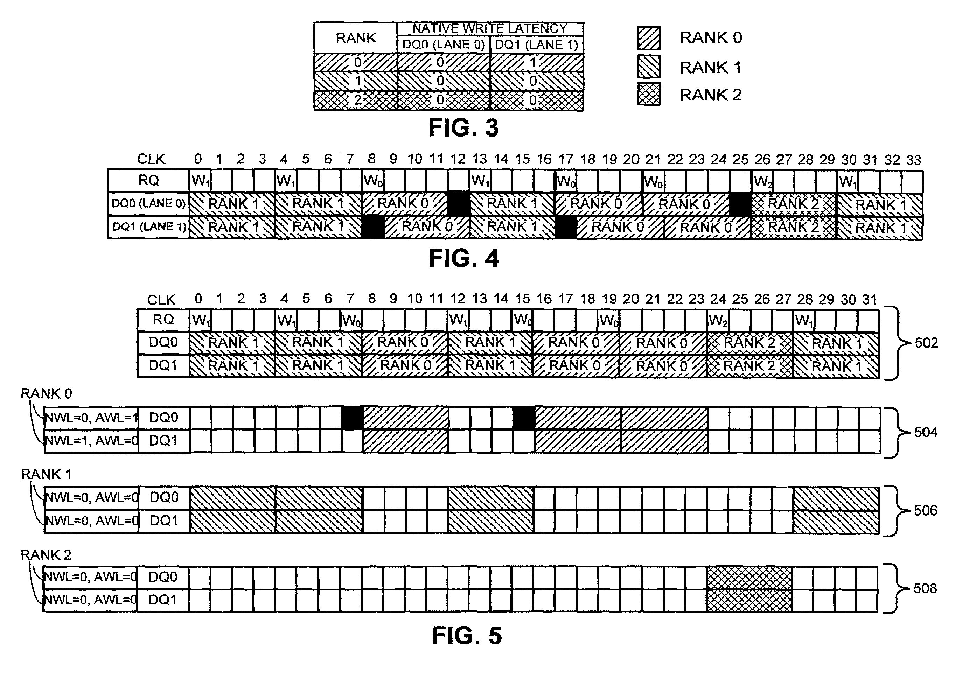

RANK 1, and devices $D_{20}$ and $D_{21}$ in RANK 2. RANK 0, RANK 1, and RANK 2 are respectively indicated by a different fill pattern. These patterns are also used in the timing diagrams in FIGs. 3-10. A controller 202 couples to the three-rank DRAM devices through a command/address bus 204 and a data bus 206.

Command/address bus 204 is routed to the ranks in a fly-by topology. Data bus 206 includes two lanes, DQ0 and DQ1. A respective lane couples to a corresponding DRAM device in a respective rank. For example, DRAM device $D_{00}$ in RANK 0 couples to lane DQ0, and DRAM device $D_{01}$ couples to lane DQ1. In this disclosure, a DRAM device is denoted as $D_{ij}$, wherein i denotes the rank index and $j$ denotes the lane index. Although FIG. 2 shows three ranks of memory devices coupled to the memory controller via two lanes of data bus 206, there can be more or fewer ranks and more or fewer lanes in system 200.

FIG. 3 presents a set of exemplary native write-latency values for the DRAM devices in DRAM system 200 in accordance with an embodiment of the present invention. The native write-latency values for the DRAM devices in RANK 1 and RANK 2 are both zero clock cycle. However, in RANK 0, the DRAM device on LANE 0, $D_{00}$, has a native write latency of zero cycle; and the DRAM device on LANE 1, $D_{01}$, has a latency of one cycle. If the native latency is compensated for by the controller alone, this uneven native write-latency distribution can cause an overhead to the data-bus utilization, as illustrated in FIG. 4. Note that the terminology "write/read-latency distribution" refers to the distribution of write/read latency values associated with different lanes in a rank.

FIG. 4 presents a write-operation timing diagram with in-controller write levelization for DRAM system 200 with the native write-latency values presented in FIG. 3, in accordance with an embodiment of the present invention. On top of the diagram is a series of indexed clock cycles (CLK). The first row illustrates the write commands issued by controller 202 on command/address bus 204. A write command is denoted as $W_i$, wherein i is the rank index.

The second and third rows illustrate the data bursts placed by controller 202 on LANE 0 and LANE 1 of data bus 206, respectively. Each data burst is assumed to occupy four clock cycles. Other data-burst lengths are possible. A black square indicates an empty clock cycle, or a "bubble," inserted on a lane to prevent the data bursts from overlapping each other when the DRAM devices in the two different lanes do not have the same native write latency.

For the first two $W_1$ commands, controller 202 places the corresponding data bursts on data bus 206 at the same time as the transmission of the $W_1$ commands, because both DRAM devices in RANK 1 have zero native write latency (see FIG. 3). For the third write operation $W_0$, controller 202 places the data burst on LANE 0 at clock cycle 8, and the data burst on LANE 1 at clock cycle 9. A bubble appears on LANE 1 during clock cycle 8, because the LANE 1 DRAM device in RANK 0 ($D_{01}$) has a native write latency of one clock cycle, whereas the LANE 0 DRAM device ($D_{00}$) has zero native write latency.

Controller 202 then inserts a bubble into LANE 0 in clock cycle 12 after the data burst to DRAM device $D_{00}$ to levelize the subsequent data bursts to RANK 1. Similarly, for the fifth and sixth write operations to RANK 0, controller 202 inserts a bubble on LANE 1 (clock cycle 17) and LANE 0 (clock cycle 25) respectively to keep the subsequent data bursts to RANK 2 levelized. Note that controller 202 does not need to insert bubbles between data bursts corresponding to two consecutive $W_0$ commands or a $W_2$ command and a $W_1$ command.

In a multi-rank, multi-lane memory system, if just in-controller levelization is used, bubbles appear when two consecutive write commands are directed to two ranks with different native write-latency distributions among different lanes. In the example in FIG. 4, bubbles appear whenever the write operation changes from RANK 0 to RANK 1 or RANK 2, or vice versa. These bubbles create overhead and prevent 100% data-bus utilization. This overhead increases with greater discrepancies among write-latency distributions as well as more frequent switching between ranks with different write-latency distributions.

Conventional technologies cannot overcome this overhead problem, because the data bus is a shared resource for all ranks, and the controller aligns data bursts for different ranks by pre-skewing the timing between write commands and data bursts. If the pre-skew for the previous write operation is different from the pre-skew for the current write operation, the controller may be required to stall before issuing the current write command. The reason for such stall, or insertion of bubbles, is that the pipelining or "tiling" on the data bus cannot interfere or cause overlapping between two consecutive write operations.

To overcome this inherent deficiency, embodiments of the present invention facilitate in-DRAM write levelization which allows a DRAM device to adjust its own write latency. With in-DRAM write levelization, a rank can have substantially similar write-latency distribution across the lanes, thereby allowing the data bus to achieve up to 100% utilization.

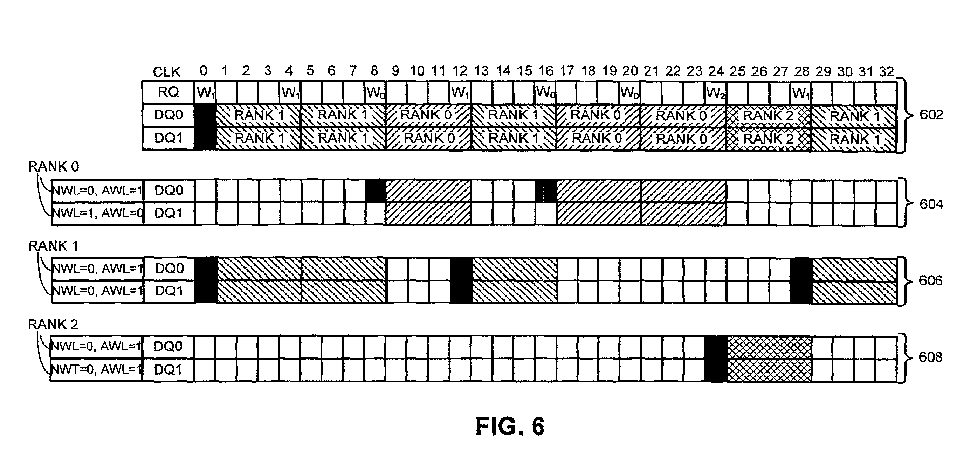

FIG. 5 presents a set of write-operation timing diagrams with in-DRAM and in-controller write levelization for DRAM memory system 200 with the native write-latency values presented in FIG. 3, in accordance with an embodiment of the present invention. Timing diagram 502 illustrates the write commands on command/address bus 204 as well as the data bursts on data bus 206. Timing diagrams 504, 506, and 508 illustrate the data bursts received by the DRAM devices in RANK 0, RANK 1, and RANK 2, respectively. Note that in the example in conjunction with FIGs. 5 and 6, the latency incurred to data bursts on the data bus is assumed to be negligible for illustration purposes. A data burst placed by controller 202 on data bus 206 is assumed to appear at a DRAM device in the same clock cycle.

In one embodiment, a DRAM device in a rank can impose an additive write latency to its native write latency.

That is, a DRAM device can artificially extend the delay between the arrival of a write command and the actual writing of data present on the corresponding lane into the memory core. The additive write-latency value of a DRAM device associated with one lane can be different from that of another DRAM device associated with a different lane in the same rank. This way, DRAM system 200 can eliminate timing variation on the shared data bus, and controller 202 is not required to stall in order to prevent "tiling" overlaps. Hence, DRAM system 200 can achieve up to 100% utilization of the data bus during a series of write operations.

In the example in FIG. 5, the native write-latency distribution of RANK 0 is different from those of the other two ranks. A native write-latency distribution of a RANK i, denoted as $D\_NWL_i$, can be defined as follows:

$$D\_NWL_i = [NWL_{i,0}, \ldots, NWL_{i,j}, \ldots, NWL_{i,n}],$$

wherein $j$ denotes the lane index, $n$ denotes the total number of lanes, and $NWL_{i,j}$ denotes the native write latency of a memory device which is associated with LANE $j$ and resides in RANK i. To levelize write latencies associated with different lanes in RANK 0, the DRAM device on LANE 0, RANK0 ($D_{00}$) is assigned an additive write latency (AWL) of one clock cycle, i.e., "AWL=1" as shown at the left end of timing diagram 504. Since the native write latency of DRAM device $D_{00}$ is zero, i.e., "NWL=0", the total write latency of DRAM device $D_{00}$ is one clock cycle. For DRAM device $D_{01}$, since its native write latency is already one clock cycle, its additive write latency is set to zero. Therefore, the total write latency of DRAM device $D_{11}$ is also one clock cycle. This way, the DRAM devices in RANK 0 are levelized on a per-device basis. As to RANK 1 and RANK 2, since all the DRAM devices therein have a native write latency of zero, the additive write latency for these devices is also set to zero.

Consequently, the distributions of total write latencies in different ranks can be substantially similar, which allows the data bursts to be fully pipelined on the data bus. A total write-latency distribution of a RANK i, denoted as $D\_TWL_i$, can be defined as follows:

$$D\_TWL_i = [TWL_{i,0}, \ldots, TWL_{i,j}, \ldots, TWL_{i,n}],$$

wherein $j$ denotes the lane index, $n$ denotes the total number of lanes, and $TWL_{i,j}$ denotes the total write latency of a memory device which is associated with LANE $j$ and resides in RANK $i$. Hence, $TWL_{i,j} = NWL_{i,j} + AWL_{i,j}$. When the distributions of total write latencies in different ranks are substantially similar, up to 100% data-bus utilization can be achieved.

Note that identical distributions of total write latencies in different ranks are not required to achieve 100% data-bus utilization. For example, the distributions of total write latencies in different ranks in the example shown in FIG. 5 are considered substantially similar if RANK 0 had a total write-latency distribution of [0, 1], RANK 1 had a total write-latency distribution of [1, 2], and RANK 2 had a total write-latency distribution of [2, 3] (note that these exemplary values are different from the values shown in FIG. 5). In this situation, controller 202 can still facilitate up to 100% data-bus utilization by properly pre-skewing write commands with respect to the corresponding data bursts for each rank. In other words, 100% data-bus utilization is attainable so long as the different ranks exhibit substantially the same distribution of *relative* total write latencies, while actual values of total write latency associated with a lane in different ranks can still be different. In one embodiment, a distribution of *relative* total write latencies of a RANK i, denoted as $D\_RTWL_i$, can be defined as follows:

$$D\_RTWL_i = [\Delta TWL_{i,0}, \ldots, \Delta TWL_{i,j}, \ldots, \Delta TWL_{i,n}],$$

where $\Delta TWL_{i,j} = (TWL_{i,j} - TWL_{i,0})$. In this example, RANK i' and RANK i" would have substantially identical distributions of *relative* total write latencies when $D\_RTWL_{i'} = D\_RTWL_{i''}$.

As illustrated in FIG. 5, after levelization, the DRAM devices in RANK 0 both have one-cycle total write latency, whereas the DRAM devices in RANK 1 and RANK 2 all have zero total write latency. Full data-bus utilization is possible because controller 202 can pre-skew a write command in relation to the corresponding data bursts, so that the data bursts can fully occupy the data bus without bubbles.

In the example illustrated in FIG. 5, the third write operation, $W_0$, is directed to RANK 0. Since the total write latency of either DRAM device in RANK 0 is one clock cycle, the controller transmits $W_0$ in clock cycle 7 and places the corresponding data bursts in clock cycle 8. Due to the additive write latency, the actual writing of data burst on LANE 0 (DQ0) is artificially delayed by one cycle, which is indicated by the left-most bubble in timing diagram 504. Therefore, both data bursts for LANE 0 and LANE 1 are levelized.

A comparison of timing diagram 502 with the timing diagram in FIG. 4 indicates that, by using in-DRAM write levelization, the system can reduce the total time for eight write operations from 34 cycles to 32 cycles. The performance improvement increases with more switching among ranks and with greater native-latency differences. Note that the system achieves full data-bus utilization in this example by using both in-DRAM and in-controller levelization. The controller can properly pre-skew the write commands to achieve rank alignment. The in-DRAM levelization mechanism can then maintain lane alignment in a rank. In a further embodiment, the system can also use just in-DRAM levelization to achieve up to 100% data-bus utilization.

FIG. 6 presents a set of write-operation timing diagrams with in-DRAM write levelization for DRAM system 200 with the native write-latency values presented in FIG. 3, in accordance with an embodiment of the present invention. Timing diagram 602 illustrates the write commands on command/address bus 204 as well as the data bursts on data bus 206. Timing diagrams 604, 606, and 608 illustrate the data bursts received by the DRAM devices in RANK 0, RANK 1, and RANK 2, respectively.

In this embodiment, the additive write latency for each DRAM device is configured such that the distributions of total write latencies in different ranks are the same:

$$D\_TWL_{i'} = D\_TWL_{i''} \; ; \; i' \neq i''.$$

That is, the DRAM devices coupled to the same lane in different ranks have the same total write latency. For example, in RANK 0, DRAM device $D_{00}$ has an additive write latency of one clock cycle, and DRAM device $D_{01}$, has zero additive write latency. Hence, the total write latency for either DRAM device $D_{00}$ or DRAM device $D_{01}$, is one clock cycle. As to RANK 1 and RANK 2, since all the DRAM devices have zero native write latency, the additive write latency for each one of them is set to one clock cycle. As a result, the total write latency for every DRAM device in all three ranks is uniformly one clock cycle. Note that, in general, it is not necessary for the total write latency for the DRAM devices in all the ranks to be matched. As explained in the description in conjunction with FIG. 5, 100% data bus utilization is attainable so far as the data latency relative to the command latency is matched on a per rank basis using in-DRAM levelization.

Complete in-DRAM write levelization frees the controller from the burden of aligning data bursts for different ranks and coordinating different timing between write commands and the corresponding data bursts. As shown in timing diagram 602, controller 202 issues write commands at constant time intervals (every four clock cycles). Each write command leads the corresponding data bursts by one clock cycle. Note that controller 202 is still responsible for determining the maximum total write latency of each rank to compute the proper lead time of a write command with respect to the corresponding data bursts, which in this example is one clock cycle. In one embodiment, the controller determines this lead time during an initialization process.

### In-DRAM Read Levelization

Similar to in-DRAM write levelization, in-DRAM read levelization can facilitate up to 100% data-bus utilization during a series of read operations. In a read operation, the controller issues a read command through the command/address bus. After receiving the read command, the DRAM devices in the corresponding rank process the read command, read the data from the memory cores, and place the data on respective lanes of the data bus. Subsequently, the controller receives the data from the data bus.

There is typically a delay, referred to as native read latency, between read-command issuance and data arrival at the controller. Due to the different topologies of the command/address bus and the data bus, the native read-latency values can differ among DRAM devices in a rank as well as among different ranks. The system may not be able to attain 100% data-bus utilization during read operations using just in-controller levelization.

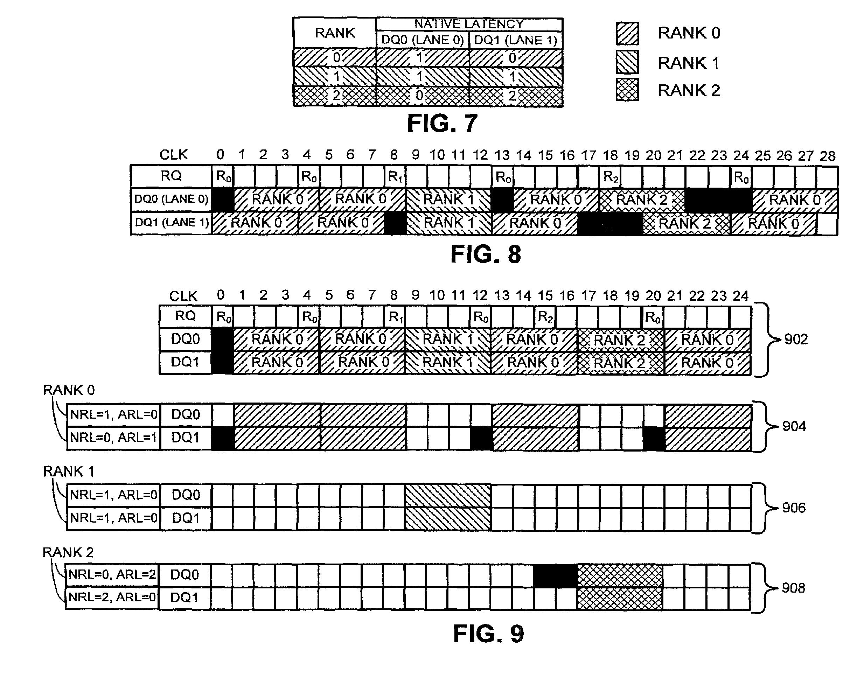

FIG. 7 presents a set of exemplary native read-latency values for the DRAM devices in DRAM system 200 in accordance with an embodiment of the present invention. The native read-latency values are: one clock cycle for DRAM device $D_{00}$ (RANK 0, LANE 0), zero for DRAM device $D_{01}$, (RANK 0, LANE 1), one clock cycle for both DRAM device $D_{10}$ (RANK 1, LANE 0) and DRAM device $D_{11}$ (RANK 1, LANE 1), zero for DRAM device $D_{20}$ (RANK 2, LANE 0), and two clock cycles for DRAM device $D_{21}$ (RANK 2, LANE 1). Note that the native read-latency distributions in these three ranks are all different, which can cause a significant overhead to the data-bus utilization, as illustrated in FIG. 8. A native read-latency distribution of a RANK i, denoted as $D\_NRL_i$ can be defined as follows:

$$D\_NRL_i = [NRL_{i,0}, \ldots, NRL_{i,j}, \ldots, NRL_{i,n}],$$

wherein $j$ denotes the lane index, $n$ denotes the total number of lanes, and $NRL_{i,j}$ denotes the native read latency of a memory device which is associated with LANE $j$ and resides in RANK i.

FIG. 8 presents a read-operation timing diagram with in-controller read levelization for DRAM system 200 with the native read-latency values presented in FIG. 7, in accordance with an embodiment of the present invention. The first row illustrates the read commands issued by controller 202 on command/address bus 204. A read command is denoted as $R_i$, wherein $i$ is the rank index. The second and third rows illustrate the data bursts placed by the DRAM devices on LANE 0 and LANE 1 of data bus 206, respectively. Each data burst is assumed to occupy four clock cycles. Other data-burst lengths are possible.

In response to the first two $R_0$ commands, DRAM device $D_{01}$ places the data bursts on LANE 1 at the same time as the arrival of the $R_0$ commands, because the native read latency of DRAM device $D_{01}$ is zero. The data bursts placed by DRAM device $D_{00}$ lag behind the $R_0$ commands by one clock cycle, since the native read latency of DRAM device $D_{00}$ is one clock cycle.

During the third read operation, controller 202 switches from RANK 0 to RANK 1 and issues an $R_1$ command. Controller 202 places $R_1$ in clock cycle 8 to ensure the data burst from DRAM device $D_{10}$ properly follows the data burst from DRAM device $D_{00}$. DRAM device $D_{11}$ places its data burst in clock cycle 9 because DRAM device $D_{11}$ has the same native read latency as DRAM device $D_{10}$. As a result, a bubble appears on LANE 1 in clock cycle 8. Similarly, a bubble appears on LANE 0 in clock cycle 13 when the controller issues the fourth read command $R_0$ which follows the $R_1$ command.

Note that three bubbles appear on LANE 1 during clock cycles 17-19 when the controller switches from read command $R_0$ to read command $R_2$. This large overhead is caused by the large difference between the native read-latency values of DRAM device $D_{01}$, and DRAM device $D_{21}$. Similarly, three bubbles appear on LANE 0 during clock cycles 22-24 when the controller switches from read command $R_2$ to read command $R_0$.

To overcome this inherent deficiency, embodiments of the present invention facilitate in-DRAM read levelization which allows a DRAM device to adjust its own read latency. With in-DRAM read levelization, a rank can have substantially similar read-latency distribution across the lanes, thereby allowing the data bus to achieve up to 100% utilization.

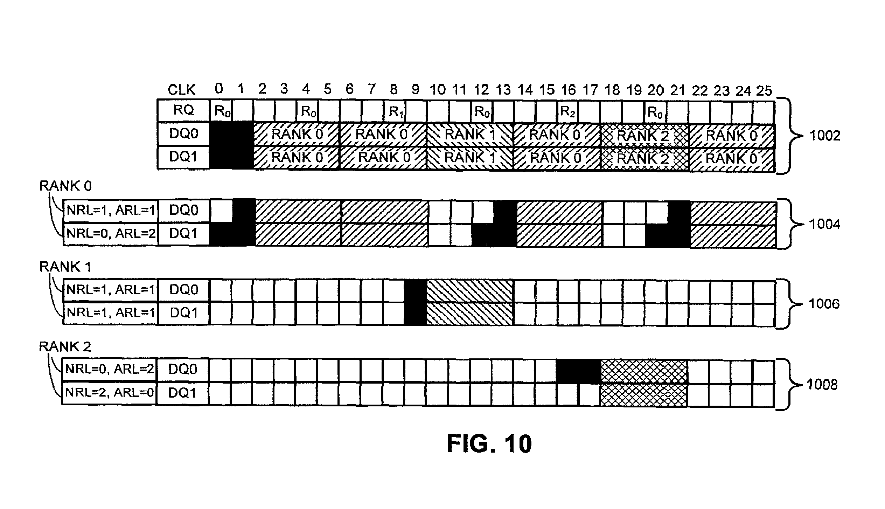

FIG. 9 presents a set of read-operation timing diagrams with in-DRAM and in-controller read levelization for DRAM system 200 with the native read-latency values presented in FIG. 7, in accordance with an embodiment of the present invention. Timing diagram 902 illustrates the read commands on command/address bus 204 as well as the data bursts on data bus 206. Timing diagrams 904, 906, and 908 illustrate the data bursts placed by the DRAM devices in RANK 0, RANK 1, and RANK 2, respectively. Note that in the examples in conjunction with FIGs. 9 and 10, the latency incurred to data bursts on data bus 206 is assumed to be negligible for illustration purposes. A data burst placed by a DRAM device on data bus 206 is assumed to appear at controller 202 in the same clock cycle.

In one embodiment, a DRAM device in a rank can impose an additive read latency to its native read latency. That is, a DRAM device can artificially extend the delay between the arrival of a read command and the time when the DRAM device places data on the data bus. In a rank, the additive read-latency value of a DRAM device associated with one lane can be different from that of another DRAM device associated with a different lane. This way, two memory devices, which are associated with the same lane but reside in two different ranks, can exhibit substantially similar total read latency, which is the sum of a device's native read latency and additive read latency. Hence, DRAM system 200 can achieve up to 100% utilization of the data bus during a series of read operations.

In the example in FIG. 9, the native read-latency distributions of the three ranks are different from one another. In one embodiment, to levelize the total read latencies associated with lanes in the three ranks, controller 202 assigns additive read-latency values to each DRAM device. Specifically, in RANK 0, DRAM device $D_{00}$ has a native read latency of one clock cycle, i.e., "NRL=1," and is assigned an additive read latency (ARL) of zero, i.e., "ARL=0." For DRAM device $D_{01}$, NRL=0 and ARL=1. Hence, both DRAM devices in RANK 0 exhibit a total read latency of one clock cycle. Similarly, the DRAM devices in RANK 1 exhibit a total read latency of one clock cycle, and the DRAM devices in RANK 2 exhibit a total read latency of two clock cycles.

Consequently, the distributions of total read latencies in different ranks can be substantially similar, which allows the data bursts to be fully pipelined on the data bus. A total read-latency distribution of a RANK i, denoted as $D\_TRL_i$, can be defined as follows:

$$D\_TRL_i = [TRL_{i,0}, \ldots, TRL_{i,j}, \ldots, TRL_{i,n}],$$

wherein $j$ denotes the lane index, $n$ denotes the total number of lanes, and $TRL_{i,j}$ denotes the total read latency of a memory device which is associated with LANE $j$ and resides in RANK $i$. Hence, $TRL_{i,j} = NRL_{i,j} + ARL_{i,j}$. When the distributions of total read latencies in different ranks are substantially similar, up to 100% data-bus utilization can be achieved.

Note that identical distributions of total read latencies in different ranks are not required to achieve 100% data-bus utilization. For example, the distribution of total read latencies in different ranks in the example shown in FIG. 9 are considered substantially similar if RANK 0 had a total read-latency distribution of [2, 1], RANK 1 can had a total read-latency distribution of [3, 2], and RANK 2 had a total read-latency distribution of [1, 0] (note that these exemplary values are different from the values shown in FIG. 9). In this situation, controller 202 can still achieve up to 100% data-bus utilization by properly pre-skewing read commands with respect to the corresponding data bursts for each rank. In other words, 100% data-bus utilization is attainable so long as the different ranks exhibit substantially the same distribution of *relative* total read latencies, while the actual values of total read latency associated with a lane in different ranks can still be different. In one embodiment, a distribution of *relative* total read latencies of a RANK i, denoted as D_RTRL$i$, can be defined as follows:

$$D\_RTRL_i = [\Delta TRL_{i,0}, \ldots, \Delta TRL_{i,j}, \ldots, \Delta TRL_{i,n}],$$

where $\Delta TRL_{i,j} = (TRL_{i,j} - TRL_{i,0})$. In this example, RANK $i'$ and RANK $i''$ would have substantially identical distributions of *relative* total read latencies when D_RTRL$_{i'}$ = D_RTRL$_{i''}$.

As illustrated in FIG. 9, after levelization, the DRAM devices in RANK 0 and RANK 1 all have one-cycle total read latency, whereas the DRAM devices in RANK 2 both have two-cycle total read latency. Full data-bus utilization is possible because controller 202 can pre-skew a read command in relation with the corresponding data bursts, so that the data bursts can fully occupy the data bus without bubbles.

In the example illustrated in FIG. 9, the fifth read operation, $R_2$, is directed to RANK 2. Since the total read latency of both DRAM devices in RANK 2 is two clock cycles, the controller pre-skews read operation $R_2$ by two clock cycles and transmits read operation $R_2$ in clock cycle 15. Due to the additive read latency, the actual time when the data burst appears on LANE 0 (DQ0) is artificially delayed by two cycles, which is indicated by the two-cycle bubble in timing diagram 908. Therefore, both data bursts for LANE 0 and LANE 1 from RANK 2 are levelized.

A comparison of timing diagram 902 with the timing diagram in FIG. 8 indicates that, by using in-DRAM read levelization, the system can reduce the total time for six read operations from 29 cycles to 25 cycles. In general, the performance improvement increases with more switching among ranks and with greater native-latency differences. The system achieves full data-bus utilization in this example by using both in-DRAM and in-controller read levelization. In a further embodiment, the system can also use just in-DRAM read levelization without in-controller levelization to achieve up to 100% data-bus utilization.

FIG. 10 presents a set of read-operation timing diagrams with in-DRAM read levelization for DRAM system 200 with the native read-latency values presented in FIG. 7, in accordance with an embodiment of the present invention. Timing diagram 1002 illustrates the read commands on command/address bus 204 as well as the data bursts placed by the DRAM devices on data bus 206. Timing diagrams 1004, 1006, and 1008 illustrate the data bursts transmitted by the DRAM devices in RANK 0, RANK 1, and RANK 2, respectively.

In this embodiment, the additive read latency for each DRAM device is configured such that the distributions of total read latencies in different ranks are the same:

$$D\_TRL_{i'} = D\_TRL_{i''};\ i' \neq i''.$$

That is, the DRAM devices coupled to the same lane in different ranks have the same total read latency. In this example, the largest native read latency, which is two clock cycles, occurs in DRAM device $D_{20}$. Therefore, all the DRAM devices are configured to have a total read latency of two cycles. In RANK 0, DRAM device $D_{00}$ has a native read latency of one clock cycle, and DRAM device $D_{01}$ has a native read latency of zero. Accordingly, DRAM device $D_{00}$ is assigned an additive read latency of one clock cycle, and DRAM device $D_{01}$ is assigned an additive read latency of two clock cycles. The total read latency for both DRAM device $D_{00}$ and DRAM device $D_{01}$ is two clock cycles. RANK 1 and RANK 2 are configured in a similar way such that each DRAM device exhibits two clock cycles of total read latency. As a result, the total read latency for every DRAM device in all three ranks is uniformly two clock cycles.

Complete in-DRAM read levelization frees the controller from the burden of aligning data bursts to different ranks and coordinating different timing between read commands and the corresponding data bursts. As shown in timing diagram 1002, the controller issues read commands at constant time intervals (every four clock cycles). Each read command leads the corresponding data bursts by two clock cycles. Note that the controller is still responsible for determining the maximum total read latency of a rank to compute the proper lead time of a read command with respect to the corresponding data bursts. In one embodiment, the controller determines this lead time during an initialization process.

**Implementation**

In one embodiment, to facilitate in-DRAM levelization, the controller and the DRAM system provide a levelization mechanism which configures the additive write/read latency for a DRAM device. Such a levelization mechanism can include one or more circuits. The controller first determines the native write/read latency of a DRAM device, and then determines and communicates the proper additive latency values for the DRAM device.

In conventional systems, the controller is typically required to detect the native write/read latency of each DRAM device to perform in-controller levelization properly. Hence, embodiments of the present invention can adopt a number of existing methods for detecting the native write/read latency of the DRAM devices. For example, during initialization, the controller can issue a read command to a DRAM device to read a pre-stored special data sequence. Based on the timing and value of the returned sequence, the controller can detect the DRAM device's native read latency.

After determining the native write/read latency values of the DRAM-devices, the controller then determines their proper additive write/read latency. In one embodiment, where both in-controller and in-DRAM levelization are used, the controller assigns the additive write/read latency values such that the *relative* write/read-latency distributions across the ranks are substantially similar. In a further embodiment, where just in-DRAM levelization is used, the controller assigns the additive write/read latency values such that the distributions of *total* write/read-latencies across the ranks are the same. That is, the actual values of total write/read latency associated with the same lane across different ranks are the same.

Existing DRAM devices typically include one or more registers, such as a mode register or an extended mode register, which provide a mechanism to configure additive write/read latency. However, in a conventional multi-rank, multi-lane configuration, the controller typically programs a DRAM device's additive write/read latency through the command/address bus using a device-select signal, which selects an entire rank at once. In other words, in conventional systems, all the DRAM devices in a rank have uniform additive write/read latency values.

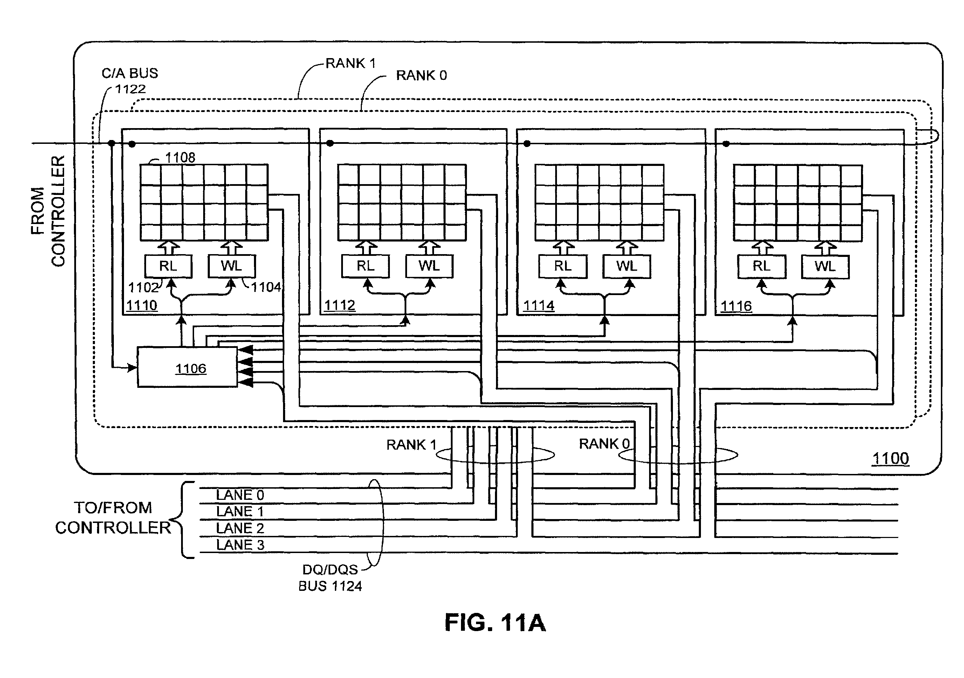

In one embodiment of the present invention, the controller configures the additive write/read latency for individual DRAM devices in a rank using both the command/address bus and the data bus. FIG. 11A presents a block diagram of a DRAM module 1100 that facilitates in-DRAM write and read levelization in accordance with an embodiment of the present invention. DRAM module 1100 is in communication with a memory controller through a data bus 1124 which includes four lanes and a command/address bus 1122. DRAM module 1100 includes two memory ranks, RANK 0 and RANK 1. RANK 0 includes four DRAM devices, 1110, 1112, 1114, and 1116. A respective DRAM device includes at least one memory core, a read-latency register (RL) and a write-latency register (WL). For instance, DRAM device 1110 includes a memory core 1108, a read-latency register 1102, and a write-latency register 1104. Furthermore, a respective memory rank also includes a levelization mechanism which can include one or more circuits. For instance, RANK 0 includes levelization mechanism 1106 which can individually configure the additive write/read latency of the DRAM devices.

In this example, command/address bus 1122 is routed from the controller to RANK 0 and RANK 1 in a fly-by topology. In a rank, a respective DRAM device couples to a respective lane of data bus 1124. For example, DRAM devices 1110, 1112, 1114, and 1116 in RANK 0 are coupled to LANE 0, LANE 1, LANE 2, and LANE 3 respectively. During the initial configuration process, the controller issues an additive-latency configuration command directed to a given rank over the command/address bus 1122, and places the additive write/read latency value for each DRAM device on the corresponding lane. Levelization mechanism 1106 then reads the values from the lanes and configures the additive write/read latency for each DRAM device accordingly.

For example, the controller can send a configuration command to RANK 0 during initialization. The controller further places the additive write/read latency values for DRAM devices 1110, 1112, 1114, and 1116 on LANE 0, LANE 1, LANE 2, and LANE 3, respectively. Note that the controller may insert a delay between issuing the configuration command and placing the additive-latency values on the data bus to accommodate the native write latency of the DRAM devices.

Levelization mechanism 1106 in RANK 0 subsequently receives the configuration command. In response, levelization mechanism 1106 reads the value from the four lanes and obtains the additive write/read latency values for the DRAM devices. For example, levelization mechanism 1106 reads the value from LANE 0, and produces an additive write or read latency value for DRAM device 1110. In some embodiments, where a DRAM device's additive write latency can be derived from its additive read latency or vice versa, one configuration operation can be used to configure both additive write and read latency. In some embodiments, where the additive write latency and the additive read latency in a DRAM device are independent from each other, the controller can issue two configuration commands, one for write and one for read, to configure the DRAM devices.

After decoding the value obtained from LANE 0, levelization mechanism 1106 then sends the additive write or read latency value to write-latency register 1104 or read-latency register 1102 in DRAM device 1110, together with the corresponding control signals. In response, DRAM device 1110 configures the additive write or read latency for memory core 1108 based on the values stored in write-latency register 1104 or read-latency register 1102. In some embodiments, the additive write/read latency values can be stored in a general or multi-purpose register. In that case, separate write-latency and read-latency registers can be optional.

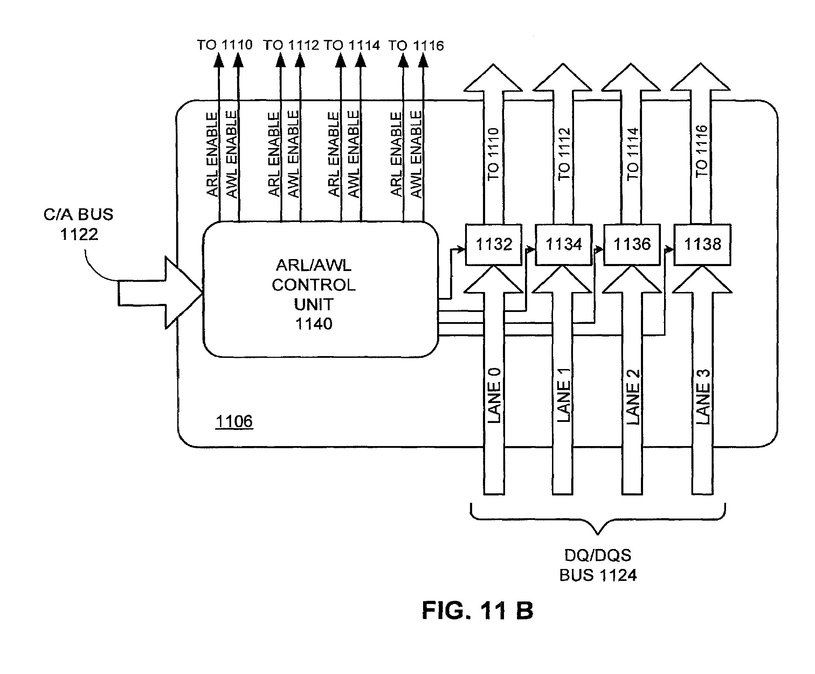

FIG. 11B presents a block diagram of levelization mechanism 1106 in accordance with an embodiment of the present invention. Levelization mechanism 1106 includes an AWL/ARL control unit 1140 and four AWL/ARL value decoders 1132, 1134, 1136, and 1138.

AWL/ARL control unit 1140 couples to command/address bus 1122 and produces AWL/ARL enable signals for DRAM devices 1110, 1112, 1114, and 1116. AWL/ARL control unit 1140 also couples to the four AWL/ARL, value decoders 1132, 1134, 1136, and 1138. AWL/ARL value decoders 1132, 1134, 1136, and 1138 couple to the four lanes of data bus 1124, respectively, and produces the corresponding AWL and/or ARL values for DRAM devices 1110, 1112, 1114, and 1116, respectively.

During the configuration process, the memory controller issues an AWL/ARL configuration command on the command/address bus and places the corresponding AWL/ARL values on the four lanes of data bus 1124. After receiving the AWL/ARL configuration command over command/address bus 1122, AWL/ARL control unit 1140 generates activation signals for AWL/ARL value decoders 1132, 1134, 1136, and 1138, which in turn decodes the AWL/ARL values received from the four lanes of data bus 1124, and places these values on respective channels to the write-latency or read-latency registers of DRAM devices 1110, 1112, 1114, and 1116. In addition, AWL/ARL control unit 1140 generates AWL/ARL enable signals to active the write-latency or read-latency registers of DRAM devices 1110, 1112, 1114, and 1116.

In some embodiments, a DRAM device is provided with a separate levelization mechanism, which can reside outside or inside the DRAM device. Such a device-specific levelization mechanism can be activated when a configuration command is received over the command/address bus. After activation, the levelization mechanism reads the data from the lane coupled to the DRAM device, obtains the additive write/read latency value, and configures the memory core accordingly.

In further embodiments, the controller can use a separate communication channel, such as a dedicated signal path, either alone or in combination with the command/address bus and/or data bus, to communicate the additive write/read latency values to a DRAM device.

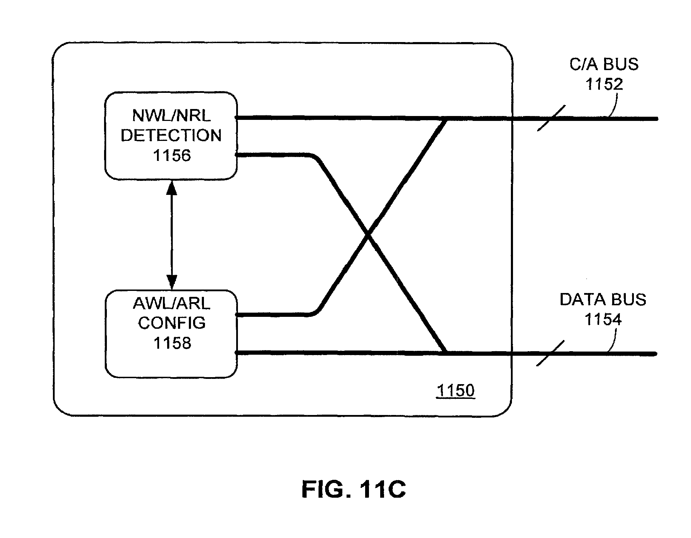

FIG. 11C presents a block diagram of a memory controller 1150 in accordance with an embodiment of the present invention. Memory controller 1150 includes a native write-latency/read-latency detection mechanism 1156 and an additive write-latency/read-latency configuration mechanism 1158. Memory controller 1150 is coupled to a command/address bus 1152 and a data bus 1154.

During an initial configuration process, NWL/NRL detection mechanism 1156 first detects the NWL and/or NRL of the DRAM devices in a memory rank. NWL/NRL detection mechanism 1156 then communicates the detected NWL/NRL values to AWL/ARL configuration mechanism 1158. AWL/ARL configuration mechanism 1148 subsequently computes the proper AWL/ARL values for the respective DRAM devices to achieve in-DRAM levelization, and communicates these values to the DRAM devices by placing the AWL/ARL values on different lanes of data bus 1154 coupled to the respective DRAM devices and by issuing an AWL/ARL configuration command to activate the AWL/ARL configuration process on the memory rank.

In one embodiment, to detect the native read latency of DRAM devices in a rank, NWL/NRL detection 1156 issues a read command to that rank. In response, DRAM devices in that rank places a special data sequence onto the lanes of the data bus. After receiving these special data sequences, NWL/NRL detection mechanism 1156 computes the native latency for a respective DRAM device based on the values of data sequence received on a respective lane corresponding to that DRAM device.

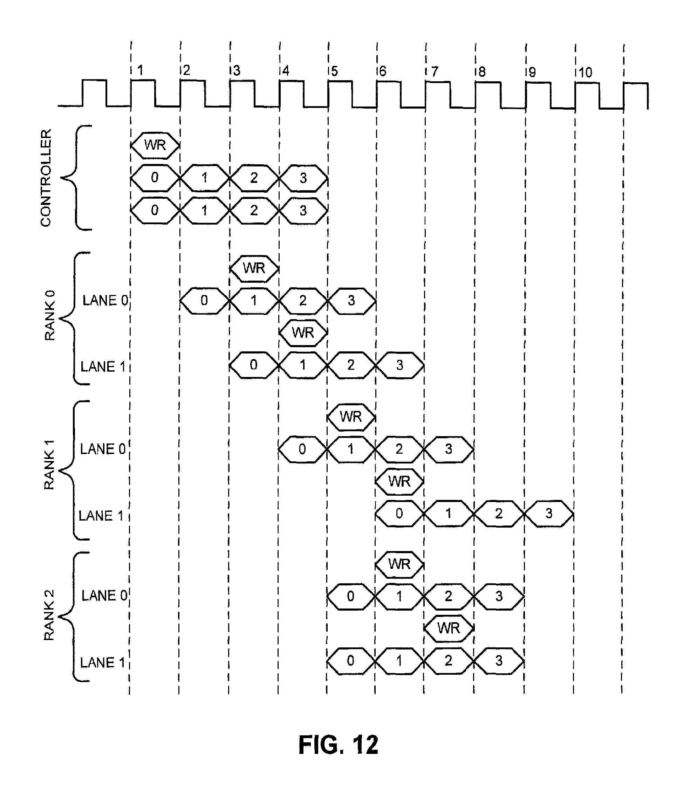

In one embodiment, a DRAM device can determine its own native write latency. FIG. 12 presents a set of timing diagrams during an in-DRAM write-levelization configuration process in accordance with an embodiment of the present invention. During initialization, assuming that the minimum native write latency among all the memory devices is 0, the controller sends a write command on the command/address bus and simultaneously a data burst of value 0, 1, 2, 3 in both lanes of the data bus, wherein each value occupies one clock cycle. When the write command arrives at a DRAM device, the DRAM device samples the data bus normally, and, depending on its native write latency, receives one of the values in the data burst. The DRAM device then takes the first received data word as the value of its native write latency in terms of clock cycles. In one embodiment, ARL/WRL value decoders 1132, 1134, 1136, and 1138 can be configured to operate in conjunction with ARL/AWL control unit 1140 as a native write-latency detection mechanism.

The components of the in-DRAM cycle-based levelization mechanism described above can include any collection of computing components and devices operating together. The components of the in-DRAM cycle-based levelization mechanism can also be components or subsystems in a larger computer system or network. Components of an in-DRAM cycle-based levelization mechanism can also be coupled among any number of components (not shown), for example, buses, controllers, memory devices, and data input/output (I/O) devices, in any number of combinations. Many of these system components may be situated on a common printed circuit board (for example, a graphics card or game console device), or may be integrated in a system that includes several printed circuit boards that are coupled together in a system, for example, using connector and socket interfaces such as those employed by personal computer motherboards and dual inline memory modules ("DIMM"). In other examples, complete systems may be integrated in a single package housing using a system in package ("SIP") type of approach. Integrated circuit devices may be stacked on top of one another and utilize wire bond connections to effectuate communication between devices or may be integrated on a single planar substrate in the package housing.

Further, functions of the in-DRAM cycle-based levelization mechanism can be distributed among any number/ combination of other processor-based components. The in-DRAM cycle-based levelization mechanisms described above include, for example, various DRAM systems. As examples, the DRAM memory systems can include double data rate ("DDR") systems like DDR SDRAM as well as DDR2 SDRAM, DDR3 SDRAM, and other DDR SDRAM variants, such as Graphics DDR ("GDDR") and further generations of these memory technologies, including GDDR2 and GDDR3, but are not limited to these memory systems.

Aspects of the in-DRAM cycle-based levelization mechanisms described herein may be implemented as functionality programmed into any of a variety of circuitry, including programmable logic devices (PLDs), such as field programmable gate arrays (FPGAs), programmable array logic (PAL) devices, electrically programmable logic and memory devices, and standard cell-based devices, as well as application specific integrated circuits (ASICs). Some other possibilities for implementing aspects of the in-DRAM cycle-based levelization mechanisms include: microcontrollers with memory (such as electronically erasable programmable read only memory (EEPROM), embedded microprocessors, firmware, software, etc.). Furthermore, aspects of the in-DRAM cycle-based levelization mechanisms may be embodied in microprocessors having software-based circuit emulation, discrete logic (sequential and combinatorial), custom devices, fuzzy (neural) logic, quantum devices, and hybrids of any of the above device types. The underlying device technologies may be provided in a variety of component types, e.g., metal-oxide semiconductor field-effect transistor (MOSFET) technologies like complementary metal-oxide semiconductor (CMOS), bipolar technologies like emitter-coupled logic (ECL), polymer technologies (e.g., silicon-conjugated polymer and metal-conjugated polymer-metal structures), mixed analog and digital, etc.

One embodiment provides a system, which comprises a plurality of memory devices arranged in a plurality of memory ranks, wherein memory devices in each rank are coupled to different lanes of a data bus. Moreover, at least one levelization mechanism that couples to at least one of the plurality of memory devices in a first rank and individually controls at least one of an additive write latency and an additive read latency for each one of at least some of the plurality of memory devices, to ensure that a distribution of relative total write or read latencies associated with the memory devices in the first rank is substantially similar to that in a second rank.

In one embodiment, the memory devices in at least two ranks exhibit different distributions of native write or read latencies.

In one embodiment, the levelization mechanism controls at least one of the additive write latency and additive read latency for the memory device to ensure that the memory device exhibits a substantially similar total write latency, total read latency, or both, as a corresponding memory device coupled to the same lane in the second rank.

In one embodiment, each memory rank couples to a command/address bus.

In one embodiment, the levelization mechanism receives from the command/address bus a command for configuring at least one of the additive write latency and additive read latency for the memory device. Additionally, the levelization mechanism receives from the data bus information indicative of at least one of the additive write latency and additive read latency for the memory device.

In one embodiment, at least one register in the memory device stores the information received from the data bus.

In one embodiment, the system includes two or more ranks of memory devices, wherein a first rank comprises two or more lanes of a data bus, wherein a first lane in the first rank is associated with a first additive write or read latency; and wherein a second lane in the first rank is associated with a second additive write or read latency that is different from the first additive write or read latency.

In one embodiment, the lanes in the first rank are couple to at least one memory device.

One embodiment provides a dynamic random-access memory (DRAM) module, comprising: a plurality of DRAM devices in a multi-rank, multi-lane arrangement; and a levelization mechanism to individually control at least one of an additive write latency and an additive read latency of a DRAM device in a rank.

In one embodiment, the levelization mechanism ensures at least one of a distribution of relative total write latencies and a distribution of relative total read latencies among the DRAM devices coupled to different lanes in the rank is substantially similar to that in another rank.

In one embodiment, the levelization mechanism ensures that at least one of the total write latency and the total read latency of each DRAM device in the rank is substantially similar to that of a corresponding DRAM device coupled to the same lane in another rank.

In one embodiment, the levelization mechanism receives from a memory controller a configuration command through a command/address bus. In response to the configuration command, the system receives a value indicative of at least one of the additive write latency and additive read latency of the DRAM device through a lane coupled to the DRAM device and configures at least one of the additive write latency and additive read latency of the DRAM device based on the received value.

One embodiment provides a system, comprising: a memory core; a register coupled to the memory core; a levelization mechanism, comprising an additive write-latency or additive read-latency value decoder that couples to a data bus, and an additive write-latency or additive read-latency control unit that couples to a command/address bus. In this embodiment, the levelization mechanism couples to the register, the data bus, and the command/address bus.

In one embodiment, the levelization mechanism receives from the command/address bus a configuration command issued by a memory controller; and receives from the data bus information indicative of at least one of an additive write latency and an additive read latency for the memory device.

In one embodiment, the levelization mechanism communicates at least one of a value of the additive write latency and a value of the additive read latency to the register based on the information received from the data bus, and sets at least one of the additive write latency and additive read latency for the memory device based on the value stored in the register.

One embodiment provides a memory controller, comprising: a read-latency detection mechanism to determine a native read latency of a memory device configured in a multi-rank, multi-lane arrangement; and an additive read-latency configuration mechanism to communicate to the memory device information indicative of an additive read latency for the memory device.

In one embodiment, while communicating the information to the memory device, the additive read-latency configuration mechanism communicates such information in a lane on a data bus coupled to the memory device and issues a command on a command/address bus.

In one embodiment, while determining the native read latency of the memory device, the read-latency detection mechanism: issues a read command to the memory device; receives data from the memory device in response to the read command; and computes a latency between issuing the read command and receiving the data.

One embodiment provides a memory controller, comprising: an additive write-latency configuration mechanism to communicate to a memory device information indicative of an additive write latency for the memory device in a multi-rank, multi-lane arrangement, wherein the additive write latency for the memory device is different from an additive write latency for another memory device in a same rank.

In one embodiment, while communicating the information to the memory device, the additive write-latency configuration mechanism concurrently sends a write command and one or more data bursts to the memory device, thereby allowing the memory device to measure its native write latency based on a value of the data burst received in response to the write command.

One embodiment provides a method which operates by: receiving from a memory controller information indicative of at least one of an additive write latency and an additive read latency for a memory device in a multi-rank, multi-lane arrangement; and individually levelizing total write latency and/or total read latency for memory devices coupled to different lanes in a rank.

In one embodiment, individually levelizing the total write latency and/or total read latency for the memory devices comprises: configuring an additive write latency and/or additive read latency for the memory device based on the received information.

In one embodiment, receiving the information from the memory controller comprises: receiving a command from a command/address bus; and receiving a value of the additive write latency and/or a value of the additive read latency, or both, for the memory device from a lane of a data bus to which the memory device couples.

One embodiment provides a method which operated by: determining at least one of a native write latency and a native read latency of a memory device configured in a multi-rank, multi-lane arrangement; determining at least one of an additive write latency and an additive read latency for the memory device, wherein the additive write latency and/or additive read latency are different from those of another memory device coupled to a different lane in a same rank; and communicating to the memory device information indicative of the additive write latency and/or the additive read latency.

In one embodiment, the additive write latency causes a distribution of relative total write latencies associated with the memory devices in one rank to be substantially similar to that in another rank.

In one embodiment, the additive read latency causes a distribution of relative total read latencies associated with the memory devices in one rank to be substantially similar to that in another rank.

In one embodiment, communicating the information to the memory device comprises: communicating a configuration command to the memory device over a command/address bus; and communicating a value of the additive write latency and/or a value of the additive read latency to the memory device in a lane to which the memory device couples.

One embodiment provides a machine-readable media including information that represents an apparatus, the represented apparatus comprising: a levelization mechanism to receive information indicative of at least one of an additive write latency and an additive read latency for a memory device in a multi-rank, multi-lane arrangement, wherein the additive write latency and/or additive read latency are different from those of another memory device in the same rank.

In one embodiment, the levelization mechanism receives a levelization command over a command/address bus and receives a value for the additive write latency and/or additive read latency over a data bus.

The foregoing descriptions of embodiments have been presented only for purposes of illustration and description. They are not intended to be exhaustive or to limit the present embodiments to the forms disclosed. Accordingly, many modifications and variations will be apparent to practitioners skilled in the art. Additionally, the above disclosure is not intended to limit the present invention. The scope of the present invention is defined by the appended claims.

It follows a list of further embodiments of the invention:

Embodiment 1. An apparatus comprising:

a command bus;
a data bus; and first and second memory devices coupled in common to the command bus to receive a memory write command, and coupled to respective first and second portions of the data bus to receive, in parallel, respective first and second portions of a write data value associated with the memory write command, wherein the first memory device is configurable, independently of the second memory device, to adjust a first timing offset between arrival of the memory write command and a time at which the first portion of the data bus is sampled to receive the first portion of the write data.

Embodiment 2. The apparatus with the features of embodiment 1 wherein a first time interval between arrival of the memory write command and arrival of the first portion of the write data at the first memory device is potentially different from a second time interval between arrival of the memory write command and arrival of the second portion of the write data at the second memory device, and wherein the independent configurability of the first memory device with respect to the first timing offset enables compensation for the potential difference between the first and second time intervals.

Embodiment 3. The apparatus with the features of embodiment 1 wherein the second memory device is configurable, independently, of the first memory device, to adjust a second timing offset between arrival of the memory write command and a time at which the second portion of the data bus is sampled to receive the second portion of the write data.

Embodiment 4. The apparatus with the features of embodiment 3 wherein the first and second memory devices are independently configurable in response to a configuration command transmitted on the command bus and respective first and second latency values transmitted on the first and second portions of the data bus, wherein the first memory device comprises circuitry to adjust the first timing offset according to the first latency value and the second memory device comprises circuitry to adjust the second timing offset according to the second latency value.

Embodiment 5. The apparatus with the features of embodiment 4 wherein the first latency value indicates a first number of clock cycles of delay to be added to the first time interval, and wherein the second latency value indicates a second number of clock cycles of delay to be added to the second time interval.

Embodiment 6. The apparatus with the features of embodiment 5 wherein the first number of clock cycles may include a fraction of a clock cycle.

Embodiment 7. The apparatus with the features of embodiment 6 wherein at least one of the first and second latency values may be zero.

Embodiment 8. The apparatus with the features of embodiment 4 wherein the circuitry to adjust the first timing offset according to the first latency value comprises a first register to store the first latency value, and wherein the circuitry to adjust the second timing offset according to the second latency value comprises a second register to store the second latency value.

Embodiment 9. The apparatus with the features of embodiment 8 wherein freedom to store a first latency value that is different from the second latency value establishes the configurability of the first memory device that is independent of the second memory device.

Embodiment 10. The apparatus with the features of embodiment 1 further comprising a printed circuit board having the command bus, data bus and first and second memory devices disposed thereon, the printed circuit board having a socket connector to enable the apparatus to be removably inserted into a connector socket.

Embodiment 11. The apparatus with the features of embodiment 1 wherein the first and second memory devices comprise circuitry to output, in response to a memory read command transmitted on the command bus, respective first and second portions of a read data value on the first and second portions of the data bus, and wherein the first memory device is configurable, independently of the second memory device, to adjust a second timing offset between arrival of the memory read command and a time at which the first portion of the read data value is output onto the first portion of the data bus.

Embodiment 12. The apparatus with the features of embodiment 11 wherein the second memory device is configurable, independently of the first memory device, to adjust a third timing offset between arrival of the memory read command and a time at which the second portion of the read data value is output onto the second portion of the data bus.

Embodiment 13. The apparatus with the features of embodiment 12 wherein the first and second memory devices are independently configurable in response to a configuration command transmitted on the command bus and respective first and second latency values transmitted on the first and second portions of the data bus, wherein the first memory device comprises circuitry to adjust the second timing offset according to the first latency value and the second memory device comprises circuitry to adjust the third timing offset according to the second latency value.

Embodiment 14. The apparatus with the features of embodiment 13 wherein the circuitry to adjust the second timing offset according to the first latency value further comprises circuitry to adjust the first timing offset according to the first latency value, the circuitry to adjust the first and second timing offsets including a register to store the first latency value.

Embodiment 15. The apparatus with the features of embodiment 13 wherein the circuitry to adjust the second timing offset includes a register to store the first latency value, and wherein the first memory device further comprises a register to store a third latency value received via the first portion of the data bus and circuitry to adjust the first timing offset according to the third latency value.

Embodiment 16. The apparatus with the features of embodiment 1 further comprising third and fourth memory devices coupled in common to the command bus to receive the memory write command, and coupled to the first and second portions of the data bus, respectively, to receive, in parallel, the respective first and second portions of the write data value, wherein the first memory device is configurable, independently of the third and fourth memory devices, to adjust the first timing offset, and wherein each of the second, third and forth memory devices is likewise independently configurable to adjust a respective timing offset between arrival of the memory write command and a time at which the data bus is sampled.

Embodiment 17. The apparatus with the features of embodiment 16 wherein the first and second memory devices constitute at least a portion of a first rank of memory devices, and wherein the third and fourth memory devices constitute at least a portion of a second rank of memory devices.

Embodiment 18. The apparatus with the features of embodiment 16 wherein a first chip-select line is coupled in common to the first and second memory devices and a second chip-select line is coupled in common to the third and fourth memory devices.

Embodiment 19. A memory system comprising:

a command path; a data path; and first memory devices coupled in common to the command path and coupled to respective portions of the data path, wherein the first memory devices include respective configuration registers and circuitry to load the configuration registers with respective configuration values received via the data path in response to a first configuration command received via the command path.

Embodiment 20. The memory system with the features of embodiment 19 wherein each of the first memory devices comprises a dynamic random access memory device.

Embodiment 21. The memory system with the features of embodiment 19 further comprising a printed circuit board having the command bus, data bus and first memory devices disposed thereon, the printed circuit board having a socket connector to enable the memory system to be removably inserted into a connector socket.

Embodiment 22. The memory system with the features of embodiment 19 further comprising second memory devices coupled in common to the command path and coupled to the respective portions of the data path in parallel with the first memory devices, wherein the second memory devices include respective configuration registers and circuitry to load the configuration registers with respective configuration values received via the data path in response to a second configuration command received via the command path.

Embodiment 23. The memory system with the features of embodiment 22 further comprising a first chip-select line coupled to the first memory devices and a second chip-select line coupled to the second memory devices.

Embodiment 24. The memory system with the features of embodiment 22 further comprising a printed circuit board having the command bus, data bus and first and second memory devices disposed thereon, the printed circuit board having a socket connector to enable the memory system to be removably inserted into a connector socket.

Embodiment 25. A memory controller comprising:

a command interface to output memory read and write commands and at least one memory configuration command via a command path; a data interface to output and receive data in association with the memory read and rite commands via a data path and to output a plurality of configuration values on respective portions of the data path, the configuration values to be received by respective memory devices and stored within respective configuration registers of the memory devices in response to the at least one memory configuration command.

Embodiment 26. The memory controller with the features of embodiment 25 wherein each of the plurality of configuration values indicates, for a respective one of the memory devices, a time delay to be imposed by the memory device between receipt of a memory write command via the command path and receipt of corresponding write data via the respective portion of the data bus.

Embodiment 27. The memory controller with the features of embodiment 26 wherein the time delay to be imposed by the memory device comprises a portion of the overall time interval between receipt of the memory write command via the command path and receipt of the corresponding write data via the respective portion of the data bus.

Embodiment 28. The memory controller with the features of embodiment 25 wherein each of the plurality of configuration values indicates, for a respective one of the memory devices, a time delay to be imposed by the memory device between receipt of a memory read command via the command path and output of corresponding read data via the respective portion of the data bus.

Embodiment 29. The memory controller with the features of embodiment 28 wherein the time delay to be imposed by the memory device comprises a portion of the overall time interval between receipt of the memory read command via the command path and output of the corresponding read data via the respective portion of the data bus.

Embodiment 30. The memory controller with the features of embodiment 25 further comprising a chip-select output to assert a chip-select signal on a line coupled in common to chip-select inputs of the memory devices.

Embodiment 31. A method of operation within a memory module having a plurality of memory devices coupled to receive commands via a common command bus and coupled to receive data in parallel via respective portions of a data bus, the method comprising: programming different time delay values within the memory devices to reduce differences between command-to-data timing offsets exhibited by the memory devices due, at least in part, to physical positions of the memory devices with respect to the common command bus; receiving a first memory write command within each of the memory devices; and delaying, within each of the memory devices, for at least the programmed time delay value following receipt of the first memory write command before sampling corresponding write data via the respective portion of the data bus.

Embodiment 32. The method with the features of embodiment 31 further comprising: receiving a first memory read command within each of the memory devices; and after receiving the first memory read command, delaying, within each of the memory devices, for a time interval that includes the programmed time delay value before outputting read data that corresponds to the first memory read command.

Embodiment 33. The method with the features of embodiment 31 wherein programming different time delay values comprises programming a first set of time delay values within the memory devices and wherein delaying for at least the programmed time delay value comprises, for each of the memory devices, delaying for a respective time delay value of the first set of time delay values.

Embodiment 34. The method with the features of embodiment 33 wherein programming different time delay values comprises programming a second set of time delay values within the memory devices, the method further comprising: receiving a first memory read command within each of the memory devices; and after receiving the first memory read command, delaying, within each of the memory devices, for a time interval that includes a respective time delay value of the second set of time delay values before outputting read data that corresponds to the first memory read command.

**Claims**

1. A memory system (1100) comprising:

   a command path (1122);
   a data path (1124); and
   first memory devices (1110, 1112, 1114, 1116) coupled in common to the command path (1122) and coupled to respective portions of the data path (1124),
   wherein the first memory devices (1110, 1112, 1114, 1116) include respective configuration registers and circuitry to load the configuration registers with respective configuration values received via the data path (1124) in response to a first configuration command received via the command path (1122).

2. The memory system (1100) of claim 1 wherein each of the first memory devices (1110, 1112, 1114, 1116) comprises a dynamic random access memory device.

3. The memory system (1100) of claim 1 further comprising a printed circuit board having the command bus, data bus and first memory devices (1110, 1112, 1114, 1116) disposed thereon, the printed circuit board having a socket connector to enable the memory system (1100) to be removably inserted into a connector socket.

4. The memory system (1100) of claim 1 further comprising second memory devices coupled in common to the command path (1122) and coupled to the respective portions of the data path (1124) in parallel with the first memory devices (1110, 1112, 1114, 1116),
   wherein the second memory devices include respective configuration registers and circuitry to load the configuration registers with respective configuration values received via the data path (1124) in response to a second configuration command received via the command path (1122).

5. The memory system (1100) of claim 4 further comprising a first chip-select line coupled to the first memory devices (1110, 1112, 1114, 1116) and a second chip-select line coupled to the second memory devices.

6. The memory system (1100) of claim 4 further comprising a printed circuit board having the command bus, data bus and first and second memory devices disposed thereon, the printed circuit board having a socket connector to enable the memory system (1100) to be removably inserted into a connector socket.

7. A memory controller (102) comprising:

   a command interface to output memory read and write commands and at least one memory configuration command via a command path (1122);
   a data interface to output and receive data in association with the memory read and write commands via a data path (1124) and to output a plurality of configuration values on respective portions of the data path (1124), the configuration values to be received by respective memory devices and stored within respective configuration registers of the memory devices in response to the at least one memory configuration command.

8. The memory controller (102) of claim 7 wherein each of the plurality of configuration values indicates, for a respective one of the memory devices, a time delay to be imposed by the memory device between receipt of a memory write command via the command path (1122) and receipt of corresponding write data via the respective portion of the data bus.

9. The memory controller (102) of claim 8 wherein the time delay to be imposed by the memory device comprises a portion of the overall time interval between receipt of the memory write command via the command path (1122) and receipt of the corresponding write data via the respective portion of the data bus.

10. The memory controller (102) of claim 7 wherein each of the plurality of configuration values indicates, for a respective one of the memory devices, a time delay to be imposed by the memory device between receipt of a memory read command via the command path (1122) and output of corresponding read data via the respective portion of the data bus.

11. The memory controller (102) of claim 10 wherein the time delay to be imposed by the memory device comprises a portion of the overall time interval between receipt of the memory read command via the command path (1122) and output of the corresponding read data via the respective portion of the data bus.

12. The memory controller (102) of claim 7 further comprising a chip-select output to assert a chip-select signal on a line coupled in common to chip-select inputs of the memory devices.

FIG. 2

FIG. 1

EP 2 410 436 A1

| RANK | NATIVE WRITE LATENCY | |
|---|---|---|
| | DQ0 (LANE 0) | DQ1 (LANE 1) |
| 0 | 0 | 1 |
| 1 | 0 | 0 |
| 2 | 0 | 0 |

| | RANK 0 |
|---|---|
| | RANK 1 |
| | RANK 2 |

**FIG. 3**

**FIG. 4**

**FIG. 5**

FIG. 6

FIG. 7

| RANK | NATIVE LATENCY | |
| --- | --- | --- |
| | DQ0 (LANE 0) | DQ1 (LANE 1) |
| 0 | 1 | 0 |
| 1 | 1 | 1 |
| 2 | 0 | 2 |

RANK 0
RANK 1
RANK 2

FIG. 8

FIG. 9

RANK 0
NRL=1, ARL=0  DQ0
NRL=0, ARL=1  DQ1

RANK 1
NRL=1, ARL=0  DQ0
NRL=1, ARL=0  DQ1

RANK 2
NRL=0, ARL=2  DQ0
NRL=2, ARL=0  DQ1

902
904
906
908

FIG. 10

**FIG. 11A**

EP 2 410 436 A1

TO 1110  TO 1112 TO 1114  TO 1116

ARL ENABLE  AWL ENABLE  ARL ENABLE  AWL ENABLE  ARL ENABLE  AWL ENABLE  ARL ENABLE  AWL ENABLE

TO 1110  TO 1112  TO 1114  TO 1116

C/A BUS
1122

ARL/AWL
CONTROL
UNIT
1140

1132  1134  1136  1138

1106

LANE 0  LANE 1  LANE 2  LANE 3

DQ/DQS
BUS 1124

**FIG. 11 B**

FIG. 11C

FIG. 12

Europäisches
Patentamt

European
Patent Office

Office européen
des brevets

**EUROPEAN SEARCH REPORT**

Application Number

EP 11 18 4468

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2002/133666 A1 (JANZEN JEFFERY W [US] ET AL) 19 September 2002 (2002-09-19) * paragraph [0009] - paragraph [0027] * * claims 1-4,41,42; figures 1-3B * | 1-12 | INV. G06F13/16 |
| Y | US 5 129 069 A (HELM GORDON L [US] ET AL) 7 July 1992 (1992-07-07) * column 4, line 20 - column 6, line 5 * * figures 1,2 * | 1-12 | |
| A | US 2002/118578 A1 (JANZEN JEFFERY W [US] ET AL) 29 August 2002 (2002-08-29) * paragraph [0017] - paragraph [0029] * * claims 1-8; figures 2-4 * | 1-12 | |
| A | US 7 107 424 B1 (AVAKIAN ARMEN D [US] ET AL) 12 September 2006 (2006-09-12) * column 3, line 47 - column 5, line 7 * * figures 1,2 * | 1-12 | TECHNICAL FIELDS SEARCHED (IPC) G06F G11C |

The present search report has been drawn up for all claims

| Place of search | Date of completion of the search | Examiner |
|---|---|---|
| The Hague | 19 December 2011 | McDonagh, Fintan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 11 18 4468

This annex lists the patent family members relating to the patent documents cited in the above-mentioned European search report.
The members are as contained in the European Patent Office EDP file on
The European Patent Office is in no way liable for these particulars which are merely given for the purpose of information.

19-12-2011

| Patent document cited in search report | | Publication date | Patent family member(s) | | Publication date |
|---|---|---|---|---|---|
| US 2002133666 | A1 | 19-09-2002 | AU | 2002255686 A1 | 24-09-2002 |
| | | | CN | 1507629 A | 23-06-2004 |
| | | | CN | 101159163 A | 09-04-2008 |
| | | | EP | 1374245 A2 | 02-01-2004 |
| | | | JP | 2004524641 A | 12-08-2004 |
| | | | JP | 2007272929 A | 18-10-2007 |
| | | | US | 2002133666 A1 | 19-09-2002 |
| | | | US | 2004107326 A1 | 03-06-2004 |
| | | | WO | 02073619 A2 | 19-09-2002 |
| US 5129069 | A | 07-07-1992 | NONE | | |
| US 2002118578 | A1 | 29-08-2002 | AT | 303649 T | 15-09-2005 |
| | | | CN | 1503974 A | 09-06-2004 |
| | | | DE | 60205877 D1 | 06-10-2005 |
| | | | DE | 60205877 T2 | 29-06-2006 |
| | | | EP | 1374244 A2 | 02-01-2004 |
| | | | JP | 4030875 B2 | 09-01-2008 |
| | | | JP | 2004525453 A | 19-08-2004 |
| | | | JP | 2007299522 A | 15-11-2007 |
| | | | US | 2002118578 A1 | 29-08-2002 |
| | | | US | 2003002355 A1 | 02-01-2003 |
| | | | WO | 02069341 A2 | 06-09-2002 |
| US 7107424 | B1 | 12-09-2006 | NONE | | |

EPO FORM P0459

For more details about this annex : see Official Journal of the European Patent Office, No. 12/82